# EUROPÄISCHE PATENTSCHRIFT

(11) **EP 2 403 680 B1**
(45) Veröffentlichungstag und Bekanntmachung des Hinweises auf die Patenterteilung: **03.05.2017**
(21) Anmeldenummer: 10712880.3
(22) Anmeldetag: 26.02.2010
(51) Int. Cl.: B23K 26/26, B23K 26/70, C21D 9/50, C21D 9/52

(54) **GESCHWEISSTE DRÄHTE, VERFAHREN UND VORRICHTUNG ZUM SCHWEISSEN VON DRÄHTEN MIT ANNEALING VOR, WÄHREND ODER NACH DEM SCHWEISSEN**
WELDED WIRES, METHOD OF AND APPARATUS FOR WELDING WIRES, INCLUDING AN ANNEALING PROCESS PRIOR TO, DURING, OR FOLLOWING THE WELDING PROCESS
FIL SOUDE, METHODE ET DISPOSITIF DE SOUDAGE DU FILS AVEC REVENU AVANT, PENDANT OU APRES LE SOUDAGE

(30) Priorität: 02.03.2009 DE 102009011037
(43) Veröffentlichungstag der Anmeldung: 11.01.2012
(73) Patentinhaber: Haussmann, Dirk, 30890 Barsinghausen (DE)
(72) Erfinder: Haussmann, Dirk, 30890 Barsinghausen (DE)
(74) Vertreter: Jabbusch, Matthias
(86) Internationale Anmeldenummer: PCT/DE2010/000216
(87) Internationale Veröffentlichungsnummer: WO 2010/099779

(56) Entgegenhaltungen:
- JP-A- 9 049 550
- JP-A- H0 691 385
- US-A- 3 802 061
- US-A- 3 840 360
- US-A- 4 954 152
- US-A- 5 885 074
- US-A1- 2007 154 859
- US-B1- 6 311 684

## Beschreibung

Die Erfindung betrifft einen Draht, ein Verfahren und eine Vorrichtung zum Schweißen von metallischen Drähten gemäß dem Oberbegriff der Ansprüche 1, 4 und 12 (siehe, z.B., JPH06/91385 A). Aus dem Stand der Technik sind verschiedene Drahtverschweißungsverfahren bekannt, bei denen zu verschweißende Drähte mittels Bestromung verschweißt und anschließend durch eine weitere Bestromung zur Temperaturerhöhung oder in einer Glühkammer nachbehandelt werden, wobei jedoch immer die entstehende Schweißstelle als Verdickung deutlich über den radialen Querschnitt der verschweißten Drähte herausragt. Alle Schweißverfahren nach dem Stand der Technik, die mittels Verschweißung durch Bestromung funktionieren, haben mit geringer werdenden Durchmessern das Problem einer immer schlechter definierten Kontaktstelle (Oberfläche und Beschaffenheit der Kontaktstelle zur Initiierung des Stromflusses), was zu einem hohen Aufkommen an Fehlstellen führt. Des Weiteren stellt die Verdickung im Bereich der Schweißstelle ein Problem dar, so dass diese Stelle für relevante Anwendungen, meistens mechanisch egalisiert werden muss und gegebenenfalls dann nochmals ein weiterer Glühbehandlungsschritt sich anschließt, um ausreichende Zug- und Biegebelastungen sicherzustellen, wobei hier beispielsweise auf US 6,311,684 B1 verwiesen wird.

Trotz des zweimaligen nachträglichen Glühens weisen die entsprechenden Verschweißungen häufig nicht ausreichende mechanische Zugbelastungs- und Biegebelastungsstandfestigkeiten auf, wobei das mechanische Entfernen (des Verschweißungsgrates) der Verdickung im Bereich der Schweißstelle und das energetisch relativ ungünstige Glühen im Ofen einen hohen Zeit-, Energie- und somit Kostenfaktor darstellt.

Das der Erfindung zugrundeliegende Problem bzw. deren Aufgabe liegt darin, die oben genannten Nachteile zumindest teilweise zu verringern bzw. zu vermeiden, insbesondere dahingehend, dass ein mechanisches Entfernen der Verdickung im Bereich der Schweißstelle der Drähte und gleichzeitig ein mehrfaches Glühen auch vermieden wird, um somit ein kostengünstiges, schnelles und sicheres Verschweißungsverfahren von dünnen Drähten bereitzustellen.

Dieses Problem wird erfindungsgemäß gelöst durch einen Draht nach Anspruch 1, ein Verfahren nach Anspruch 4, und eine Vorrichtung nach Anspruch 12. Beim erfindungsgemäßen Verfahren handelt es sich um ein solches zum Schweißen von Drähten, insbesondere hochfesten also meist hochkohlenstoffhaltigen Drähten, insbesondere von hochfesten, dünnen Drähten, d. h. Drähten, deren Durchmesser in der Regel nicht mehr als 0,5 mm betragen, und deren Kohlenstoffanteil größer 10 Gewichtsprozent ist, das dadurch gekennzeichnet ist, dass mittels einer Laserquelle mindestens zwei Drähte miteinander verschweißt werden, wobei beispielsweise und insbesondere als Laserquelle ein gepulster Festkörperlaser in Frage kommt, wobei vor dem Schweißen mindestens ein zu verschweißender Draht mittels eines Heißgasstromes einem Annealing unterworfen wird und/oder während des Schweißens zumindest die entstehende Schweißstelle mittels eines Heißgasstromes einem Annealing unterworfen wird und/oder im Anschluss daran die entstandene Schweißstelle, die sich auch als Schweißperle gemäß der Erfindung darstellt und als solche bezeichnet wird, mittels eines Heißgasstromes, einem Annealingprozess (einem Glühen) unterworfen wird. Insbesondere ist der Heißgasstrom punktuell ausgerichtet. Insbesondere und beispielsweise weist der Heißgasstrom eine Temperatur zwischen +250°C und +500°C auf.

Das Annealing mittels eines punktuellen Heißgasstromes zu realisieren bringt neben einer extremen Vereinfachung des Verfahrensprozesses und einer sehr großen Zeitersparnis insbesondere den Vorteil, dass nur punktuell die betroffene Schweißzone der thermischen Behandlung unterworfen wird und somit der von der Schweißung nicht betroffene Draht keine, seine Eigenschaften verändernde Behandlung erfährt.

Es ist unter anderem erfindungswesentlich, dass mittels einer Laserquelle die Drähte miteinander verschweißt werden, da sich mit Hilfe eines solchen homogenen und vom Drahtdurchmesser unabhängigen Energieeintrages und unter Zuhilfenahme der später beschriebenen mechanischen Prozesssteuerungskomponenten eine Schweißstelle bildet, deren gemäß der Erfindung räumliche Dimensionen sich nicht über den radialen Querschnitt der zu verschweißenden Drähte erstreckt, wobei mit dem Applizieren eines Heißgasstromes Vorteile verbunden sind, vorzugsweise und beispielsweise, wenn dieser aus der Gruppe Luft, Stickstoff, Edelgas ausgewählt wird, da sich diese Stoffe in der Praxis sehr bewährt haben, wobei es sich darüber hinaus in der Praxis als ausgesprochen vorteilhaft herausgestellt hat, dass das Heißgas mittels einer Düse an die Schweißstelle appliziert wird, so dass ein gezieltes räumlich eng begrenztes Abgeben von Wärme ermöglicht wird, so dass vorteilhafterweise während des Anealingvorganges die höchste Temperatur in der Schweißstelle herrscht, so dass von der Schweißstelle aus gesehen in längsaxialer Richtung der Drähte ein kontinuierlicher Temperaturabfall festzustellen ist, der im wesentlichen den Erhalt der Materialeigenschaften außerhalb der Annealingzone sicherstellt.

Auf diese Art und Weise wird ein Verfahren zum Verschweißen von Drähten bereitgestellt, dass eine sichere und reproduzierbare Verschweißung gewährleistet, die ein mechanisches Entfernen von dem sonst aus dem Stand der Technik überstehenden Verschweißungsgrat an der Verschweißungsstelle entbehrlich macht, was zu erheblichen Zeit- und Geldersparnissen führt, und das auf der anderen Seite durch das spezielle Annealing mittels eines Heißgasstromes und nicht wie aus dem Stand der Technik üblich mittels eines Annealings in einem Ofen oder durch Temperaturerhöhung mittels Bestromung, durch das sich einstellende Temperaturprofil kontrolliert Rekristallisationsvorgänge in der Metallstruktur der verschweißten Drähte stattfindet, um auf diese Art und Weise eine ausgesprochen hohe Biege- und Zugbeanspruchungbarkeit zu generieren bzw. zu gewährleisten.

Es ist weiterhin vorteilhaft, wenn das Verschweißen der Drähte unter einem Schutzgas, beispielsweise und insbesondere Argon, durchgeführt wird, um entweder ein Verzundern zu vermeiden bzw. eine hohe Qualität der Schweißstelle zu erreichen.

Weiterhin ist es vorteilhaft, wenn das Schutzgas mittels der Düse für das Heißgas, also der Düse, aus der das Heißgas austritt, appliziert wird, um so einen einfachen apparativen Aufbau zu realisieren.

Es ist weiterhin vorteilhaft, wenn während des Schweißens sich die maximale Temperatur der miteinander zu verschweißenden Drähte im Zentrum der Verschweißung befindet, um auf diese Art und Weise ein zu beiden Seiten hin gleichmäßiges Temperaturgradientenprofil zu erhalten, um später eine optimale Grundlage für das Glühen bereitzustellen, was sich letztlich in hohen Zuglastfestigkeiten und Biegebeanspruchbarkeiten äußert.

Es ist insbesondere vorteilhaft, wenn die zu verschweißenden Drähte geführt werden in insbesondere zerstörbaren Röhrchen, so genannten Präzisionsausgleichsröhrchen, zur Adaption verschiedener Drahtdurchmesser als auch zur deutlichen Verbesserung des Handlings der dünnen Drähte insbesondere im Glasröhrchen, mittels einer Führungseinrichtung, welche Ihrerseits das Zueinanderführen der Drähte, den Anpressdruck als auch den Vorschub während des Schweißprozesses sowie die Wegbegrenzung der sich ineinander verschmelzenden Drähte realisiert. Die parametergenaue Einhaltung aller Kräfte und Wege während des Schweißvorgangs ermöglicht eine reproduzierbare und im radialen Umfang dem Draht entsprechende Verschweißung der Drähte. Die verwendeten Präzisionsausgleichsröhrchen können vorteilhafterweise nach dem Prozess mittels mechanischen Druckes, z. B. durch eine Zange, entfernt werden.

Aufgrund der obigen Ausführungen ist es daher jeweils vorteilhaft, wenn eben die zu verschweißenden Drähte mittels einer Führungseinrichtung aufeinandergeführt und anschließend verschweißt werden, wenn bei der Führung der zu verschweißenden Drähte diese Drähte umgebende Röhrchen verwendet werden zur gegenseitigen Ausrichtung der Drähte, wenn es sich bei den Röhrchen um Glasröhrchen, Glaskeramikröhrchen oder Keramikröhrchen handelt.

Darüber hinaus ist es vorteilhaft, wenn mittels eines Federkraftelementes die zu verschweißenden Drähte vor dem Verschweißen mit einer vom Kraftelement applizierten Kraft - ziehend oder drückend - aufeinandergefahren werden, um eine definierte zu verschweißende Stelle bereitzustellen.

Erfindungsgemäß sind unter dem Begriff "Kraftelement" Elemente zu verstehen, die derart eingestellt werden können, dass sie eine Kraft auf ein angegriffenes Element ausüben, so dass beispielsweise auch Pneumatik- oder Hydraulikzylinderelemente oder aber auch magnetische Elemente hierunter fallen, jedoch insbesondere klassische Federelemente hervorzuheben sind.

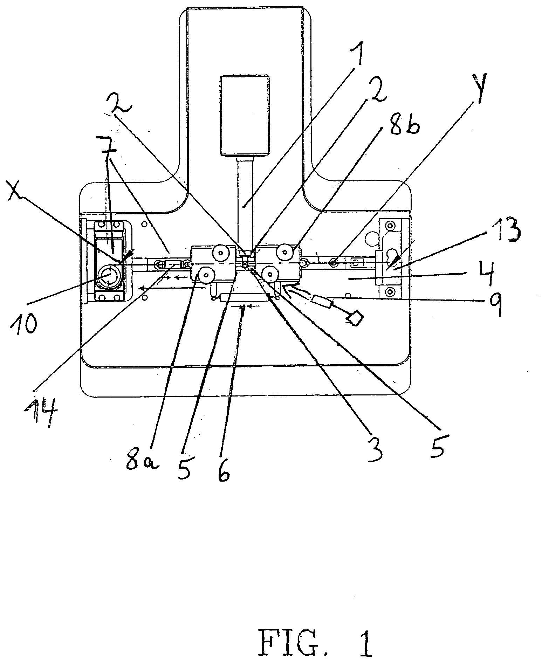

Ganz besonders vorteilhaft ist es, wenn beim Verschweißen der zu verschweißenden Drähte mittels eines bzw. des Kraftelementes die zu verschweißenden Drähte - ziehend oder drückend - ineinander gefahren werden, wobei mittels eines Wegbegrenzungselementes, beispielsweise und insbesondere eines Seils oder einer Stellschraube, das Ineinanderfahren der Drähte begrenzt wird, derart, dass, gemäß der Erfindung, beim Verschweißen der Drähte die entstehende Schweißstelle sich nicht über den radialen Querschnitt der Drähte erstreckt. Dies kann beispielsweise und insbesondere realisiert werden mittels einer in Figur 1 dargestellten und entsprechend beschriebenen Vorrichtung und den dazugehörigen Verfahrensschritten. Insbesondere wird über das Vorspannen ein definierter Anpressdruck der beiden zu verschweißenden Drähte sichergestellt, wobei im Augenblick des Verschweißens mittels Laserstrahlung, welches in der Regel nur wenige tausendstel Sekunden dauert, durch das an der Schweißstelle weich gewordene und fließfähige Material beide Drähte sich ineinander leicht zubewegen, so dass über die Begrenzung der Wegstrecke eine entstehende Verdickung der Schweißperle kontrollierend und vorbestimmend begrenzt wird. Servomotoren oder ähnliche Stellelemente wären nicht in der Lage, innerhalb dieser kurzen Zeitspannen reproduzierbar und kontrolliert die Drähte ineinanderfließend nachzuführen, so dass nicht reproduzierbare und in der Regel minderwertige Verschweißungen entstehen würden.

Vorteilhaft, da in der Praxis bewährt, ist es, wenn es sich beim Kraftelement um ein Element aus der Gruppe pneumatisches, hydraulisches, magnetisches oder Feder-Kraftelement handelt, da diese eine besonders hohe Zuverlässigkeit hinsichtlich der Reproduzierbarkeit der Qualität der Schweißstelle sicherstellen, wobei jedoch wenn auch nicht ganz in diesem Ausmaß schnelle Servomotorkraftelemente durchaus denkbar sind.

Dabei hat es sich als vorteilhaft in der Praxis herausgestellt, dass der maximale Durchmesser der zu verschweißenden Drähte 2 mm beträgt, was letztlich wohl einer Wärmedissipationen geschuldet ist und das schnelle Einbringen der Energie mittels Laserstrahlung mehr oder weniger obere Grenzen hinsichtlich eines maximalen Durchmessers zur Folge hat.

Weiterhin ist es von Vorteil, wenn nach dem Annealing ein Zuglasttest durchgeführt wird, um unmittelbar nach der Herstellung die jeweilig notwendigen Mindestbeanspruchungen hinsichtlich Zuglastfestigkeit zu bestimmen, um eventuelle Fehler bereits zu diesem Zeitpunkt zu erkennen.

Dabei ist es besonders vorteilhaft, wenn das Verschweißen der Drähte, das Annnealing und der Zuglasttest in einer Vorrichtung durchgeführt werden, um ein kompliziertes Ausspannen der verschweißten Drähte und ein erneutes Einspannen einzusparen, was wiederum Arbeitseinsatz, Zeit und somit Kosten erheblich reduziert.

Die oben gemachten Ausführungen gelten entsprechend für eine erfindungsgemäße Vorrichtung zur Durchführung des erfindungsgemäßen Verfahrens.

Es ist weiterhin ein wichtiger Aspekt der vorliegenden Erfindung, dass die zerstörbaren Präzisionsausgleichsröhrchen, hergestellt vorzugsweise aus Glas, Glaskeramik oder Keramik, verwendet werden zur Durchführung des erfindungsgemäßen Verfahrens, da die Kombination aus Verwendung von Laserstrahlen mittels einer Laserquelle für das Verschweißen und das anschließende Annealing mittels eines Heißgasstromes letztlich in der erfindungsgemäßen Vorrichtung ausgesprochen elegant und reproduzierbar durchgeführt werden kann mittels dieser Glasröhrchen, die für eine sichere Führung und hohe Stabilität der Drähte beim Aufeinanderfahren unter zunehmendem Druck auf die Drahtenden der zu verschweißenden Drähte Sorge tragen und gleichzeitig durch einfaches Zerdrücken beispielsweise mittels einer Zange nach dem Verschweißen entfernt werden können.

In produktionstechnischer Hinsicht ist es dann weiterhin von großem Vorteil, dass im Anschluss an das Verschweißen und Annealing ein Zuglasttest durchgeführt werden kann, um vor Ort die Schweißstelle auf ihre Mindesterfordernisse hin zu untersuchen und gegebenenfalls mindere Qualität auszuschließen.

Die Erfindung wird durch die nachfolgenden Beispiele nicht beschränkend erläutert.

In den Figuren zeigen:
- Fig.1:: eine schematische Prinzipskizze in Aufsicht,
- Fig. 2:: eine schematische Querschnittsansicht eines Ausschnittes aus Figur 1,
- Fig. 3:: eine schematische Querschnittsansicht der in Figur 1 gezeigten Ausführungsform,
- Fig. 4:: eine schematische Querschnittsansicht eines Ausschnittes einer weiteren Ausführungsform, und
- Fig. 5:: eine schematische Querschnittsansicht einer weiteren Ausführungsform.

In Figur 1 ist schematisch ein Aufbau einer erfindungsgemäßen Vorrichtung von oben zu erkennen.

Die zu verschweißenden Drähte 2 werden in der mittig innenliegenden Seele jeweils eines Glasröhrchen 5 fest in der beweglichen Aufnahme 8 a bzw. der feststehenden Aufnahme 8 b befestigt.

Aufnahme 8a ist mittels eines Seiles X mit der servogesteuerten Rolle 10 verbunden. Aufnahme 8b ist starr mit dem Kraftaufnahmesensor 13 verbunden.

Die Feder 6 verbindet Aufnahme 8a mit Aufnahme 8b unter Vorspannung einiger Newton. Zu diesem Prozesszeitpunkt werden die Kräfte der Feder 6 über die Aufnahmen, das Seil X und die Rolle 10 bzw. die starre Verbindung Y an den Kraftaufnahmesensor und dann jeweils an das Gehäuse übertragen.

Durch Rotation der Rolle 10 im Uhrzeigersinn bewegt sich Aufnahme 8A jetzt auf Aufnahme 8b, unter der Krafteinwirkung von Feder 6, zu, bis sich die beiden Schweißdrahtenden berühren.

Mit dem Berühren der Drähte entsteht eine Verlagerung der Federkräfte von Feder 6 auf die in den Aufnahmen 8 a und 8 b befestigten Drähte.

Seil X und starre Verbindung Y nehmen keine Kräfte mehr auf.

Durch eine definierte weitere Rotation der Rolle 10 im Uhrzeigersinn wird das Seil X um eine definierte Wegstrecke weiter frei gegeben. Diese Wegstrecke entspricht später exakt der Wegstrecke um die sich die Drähte während des Schweißvorganges, durch die Feder 6 gezogen, ineinander verschieben.

Diese Wegstrecke bestimmt den Durchmesser der Schweißperle, welche im Idealfall genau dem Drahtdurchmesser des Drahtes entspricht.

Wenn sich die Drähte berühren und die Seilrolle 10 eine definierte weitere Seilfreigabe ausgeführt hat, werden die beiden Drähte mittels Laserstrahlung bei konstantem Andruck und definiertem Weg miteinander verschweißt.

Nach Applikation der Laserstrahlung und dem dadurch stattgefundenen Verschweißen der beiden Drähte 2 ist eine Schweißstelle 3 entstanden, die dann mittels einer darauf ausgerichteten Düse 9 mittels eines Heißgasstromes (4) einem Annealing (Glühen) unterworfen wird, wobei die Temperatur des Heißgasstromes in Abhängigkeit von Material und Durchmesser ca. +250°C bis +500°C beträgt und das Heißgas Argon ist. Das Annealing findet unmittelbar nach dem Verschweißen statt.

Beim Annealing ist darauf zu achten, dass die Ausrichtung der Düse 9 derart ist, dass sich im Zentrum der Schweißstelle 3 die maximale Temperatur befindet, so dass der Temperaturverlauf stetig nach außen verlaufend absinkend ist und beim endgültigen Abkühlen nach dem Annealing aufgrund der durch das Annealing stattgefundenen Rekristallisationsprozesse dann eine hohe Zuglast und insbesondere Biegebelastbarkeit sich einstellt.

Im Anschluss an das Verschweißen und das Annealing wird unmittelbar danach, also insbesondere nach Abkühlen auf Raumtemperatur, die Schweißstelle einem Zuglasttest ausgesetzt, um die eingestellten Mindestanforderungen vor Ort zu überprüfen. Dabei wird die Rolle 10 entgegen dem Uhrzeigersinn gedreht und über das Seil X eine Feder 14 gespannt und die jetzt zunehmende Kraft über die feste Verbindung der Drähte 2 in Aufnahme 8a und 8b sowie die starre Verbindung Y an den Kraftaufnahmesensor 13 geführt. Die gesamte Kraft wird dabei über die Schweißstelle geleitet. Die Kraft der Feder 6 wird durch eine Nullung des Messsystems vor der Messung kompensiert. Durch die Drehung der Rolle 10 kann die Kraft kontinuierlich bis zum gewünschten Wert gesteigert werden.

Wird dabei die Schweißstelle 3 nicht zerstört, so ist die Verschweißung erfolgreich gewesen, so dass im Anschluss daran die beiden miteinander verschweißten Drähte - nunmehr der neue gemeinsame Draht - aus der Vorrichtung entnommen werden können.
Es sei lediglich der guten Ordnung halber darauf hingewiesen, dass die zu verschweißenden Drähte an ihren in Bezug auf die Verschweißung distalen Enden klemmend an jeweiligen Klemmelementen der Führungseinrichtung 8 befestigt werden, beispielsweise und insbesondere mittels Klemmbacken, die Teile der Führungseinrichtung 8 sind.

Weiterhin sei darauf hingewiesen, dass nach dem Verschweißen und Testen beispielsweise und insbesondere mittels einer Zange die empfindlichen Glasröhrchen einfach quetschend-zerstörend entfernt werden können.

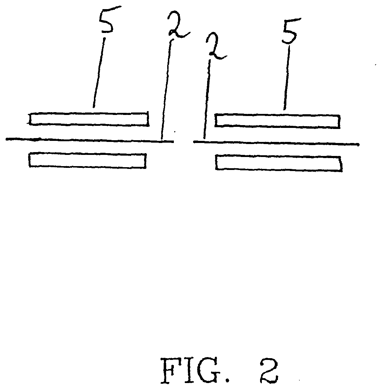

In Figur 2 ist auszugsweise und in im Vergleich zu Figur 1 vergrößerter Querschnittsdarstellung nochmals zu erkennen, wie die beiden zu verschweißenden Drähte 2 in den jeweiligen Glasröhrchen 5 angeordnet sind, um dann zusammengefahren verschweißt zu werden.

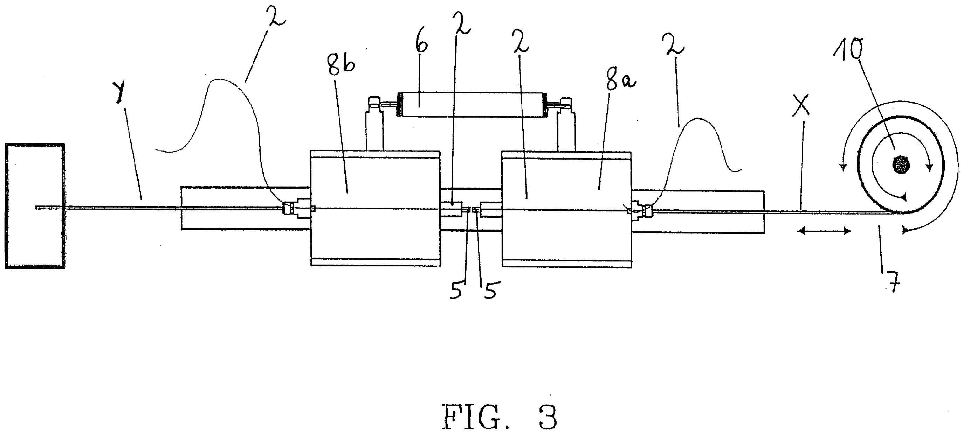

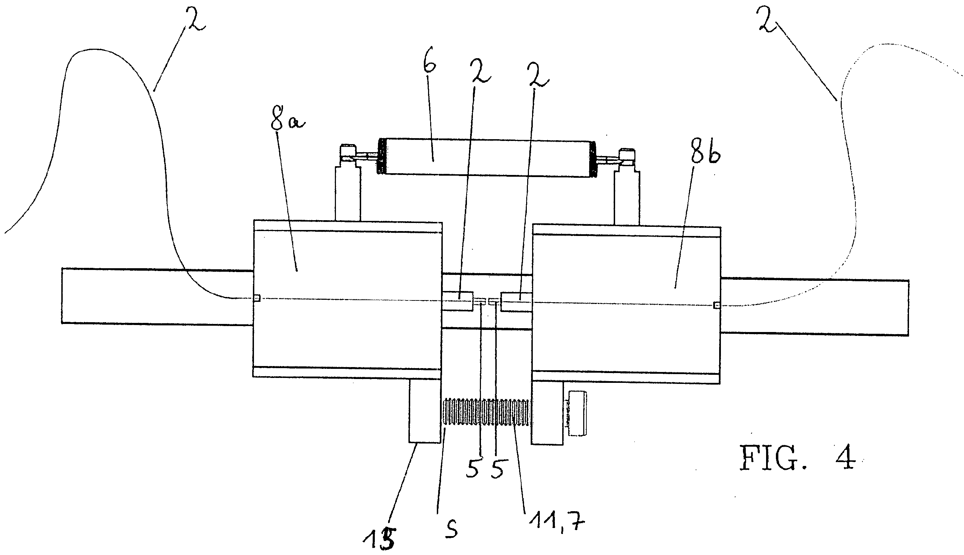

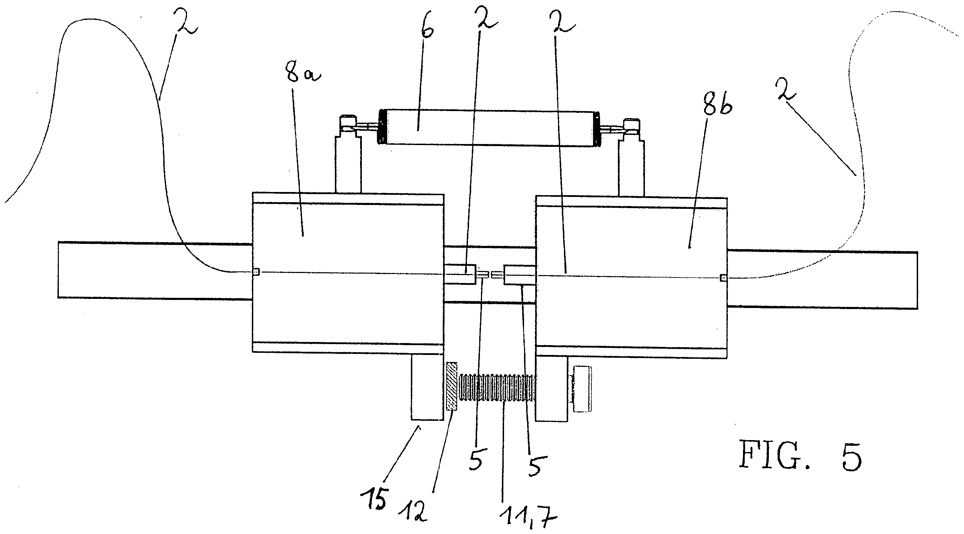

In den Figuren 3 bis 5 sind unter Bezugnahme auf die obigen Erläuterungen und Ausführungen zu den Figuren 1 und 2 unterschiedliche Ausführungsbeispielprinzipien hinsichtlich der Wegbegrenzungselemente 7 aufgezeigt, wobei in Figur 3 das Seil X als Wegbegrenzungselement 7, in Figur 4 eine Stellschraube 11 und in Figur 5 eine Stellschraube 11 und eine zwischen einem Gegenlager 15 und einem Spacer 12 als Wegbegrenzungselement dient. Bei der Ausführungsform in Figur 3 sei auf die Erläuterungen zu Figur 1 verwiesen. Hinsichtlich der Figur 4 lässt sich feststellen, dass ein ausgesprochen schmaler Spalt S zwischen einem Gegenlager 15 und dem distalen Ende der Stellschraube 11 durch entsprechendes Einstellen der Stellschraube 11 beim Verschweißen die begrenzte Wegstrecke definiert, während dies in Figur 5 durch den Spacer 12 geschieht, der vor dem Verschweißen entfernt wird.

Lediglich der guten Ordnung halber sei darauf hingewiesen, dass statt einer die Aufnahmen 8a und 8b zusammenziehenden Feder zwei aufeinanderdrückende Federn oder andere Kraftelemente eingesetzt werden können.

## Patentansprüche

1. Draht aus mindestens zwei mittels einer Laserquelle miteinander verschweißten metallischen Drähten, bei dem die Schweißstelle mittels eines Verfahrens nach einem der Ansprüche 4 bis 11 oder mittels einer Vorrichtung nach einem der Ansprüche 12 bis 20 hergestellt ist,
**dadurch gekennzeichnet,**
**dass** die Schweißstelle (3) eine beim Verschweißen der Drähte (2) entstehende Schweißperle ist, die sich nicht über den radialen Querschnitt der zu verschweißenden metallischen Drähte (2) erstreckt.

2. Draht nach Anspruch 1, **dadurch gekennzeichnet, dass** es sich bei den Drähten (2) um kohlenstoffhaltige Drähte handelt.

3. Draht nach Anspruch 1 oder 2, **dadurch gekennzeichnet, dass** der maximale Durchmesser der zu verschweißenden Drähte (2) 2 mm beträgt.

4. Verfahren zum Schweißen von metallischen Drähten, bei dem mittels einer Laserquelle (1) mindestens zwei metallische Drähte (2) miteinander verschweißt werden,
**dadurch gekennzeichnet,**
a) **dass** vor dem Schweißen zumindest ein zu verschweißender Draht (2) mittels eines Heißgasstromes (4) einem Annealing unterworfen wird,
und/oder
b) **dass** während des Schweißens zumindest die entstehende Schweißstelle (3) mittels eines Heißgasstromes (4) einem Annealing unterworfen wird,
und/oder
c) **dass** im Anschluss daran die entstehende Schweißstelle (3) mittels eines Heißgasstromes (4) einem Annealing unterworfen wird, und
**dass** beim Verschweißen der zu verschweißenden metallischen Drähte (2) diese mittels eines Federkraftelementes (6) ineinander gefahren werden, wobei das Ineinanderfahren der metallischen Drähte (2) mittels eines Wegbegrenzungselementes (7) derart begrenzt wird, dass sich die beim Verschweißen der metallischen Drähte (2) entstehende Schweißstelle (3) nicht über den radialen Querschnitt der metallischen Drähte (2) erstreckt.

5. Verfahren nach Anspruch 4, **dadurch gekennzeichnet, dass** es sich beim Heißgas um eines aus der Gruppe Luft, Stickstoff, Edelgas handelt.

6. Verfahren nach Anspruch 4 oder 5, **dadurch gekennzeichnet, dass** das Verschweißen der metallischen Drähte (2) unter einem Schutzgas durchgeführt wird.

7. Verfahren nach einem der Ansprüche 4 bis 6, **dadurch gekennzeichnet, dass** die zu verschweißenden metallischen Drähte (2) mit einer Führungseinrichtung (8a, 8b) aufeinandergeführt und anschließend miteinander verschweißt werden.

8. Verfahren nach Anspruch 7, **dadurch gekennzeichnet, dass** die zu verschweißenden metallischen Drähte (2) beim Aufeinanderführen mittels die metallischen Drähte (2) umgebender Röhrchen (5) gegenseitig ausgerichtet werden.

9. Verfahren nach einem der Ansprüche 4 bis 8, **dadurch gekennzeichnet, dass** die Schweißstelle (3) nach dem Annealing einem Zuglasttest ausgesetzt wird.

10. Verfahren nach einem der Ansprüche 4 bis 9, **dadurch gekennzeichnet, dass** die zu verschweißenden metallischen Drähte (2) vor dem Verschweißen mit einer mittels eines Federkraftelementes (6) applizierten Kraft aufeinandergefahren werden.

11. Verfahren nach einem der Ansprüche 4 bis 10, **dadurch gekennzeichnet, dass** das Annealing bei einer Temperatur von +250°C bis 500°C durchgeführt wird.

12. Vorrichtung zum Schweißen von metallischen Drähten mit einer Laserquelle, zur Durchführung des Verfahrens nach einem der Ansprüche 4 bis 11,
**dadurch gekennzeichnet,**
**dass** diese eine auf die Schweißstelle (3) ausgerichteten Düse (9) aufweist, mit der ein Heißgas (4) an die Schweißstelle (3) appliziert wird,
**dass** diese ein Federelement (6) zum Ineinanderfahren der zu verschweißenden metallischen Drähte (2) aufweist, und dass diese ein Wegbegrenzungselement (7) aufweist, mit dem das Ineinanderfahren der metallischen Drähte (2) mittels des Federkraftelementes (6) derart begrenzt wird, dass sich die beim Verschweißen der metallischen Drähte (2) entstehende Schweißstelle (3) nicht über den radialen Querschnitt der metallischen Drähte (2) erstreckt.

13. Vorrichtung nach Anspruch 12, **dadurch gekennzeichnet, dass** die Ausrichtung der Düse (9) derart ist, dass sich während des Schweißens die maximale Temperatur der miteinander zu verschweißenden metallischen Drähte (2) im Zentrum der Schweißstelle (3) befindet.

14. Vorrichtung nach Anspruch 12 oder 13, **dadurch gekennzeichnet, dass** diese derart eingerichtet ist, dass ein Schutzgas mittels der Düse (9) für das Heißgas appliziert wird.

15. Vorrichtung nach einem der Ansprüche 12 bis 14, **dadurch gekennzeichnet, dass** diese eine Führungseinrichtung (8a, 8b) aufweist, mit der die zu verschweißenden metallischen Drähte (2) aufeinandergeführt und anschließend mittels der Laserquelle (1) miteinander verschweißt werden.

16. Vorrichtung nach Anspruch 15, **dadurch gekennzeichnet, dass** die Führungseinrichtung (8a, 8b) Präzisionsausgleichsröhrchen (5) zur gegenseitigen Ausrichtung der mit den Präzisionsausgleichsröhrchen (5) zu umgebenden und mittels der Laserquelle (1) miteinander zu verschweißenden metallischen Drähte (2) aufweist.

17. Vorrichtung nach Anspruch 16, **dadurch gekennzeichnet, dass** es sich bei den Präzisionsausgleichsröhrchen (5) um Glas-, Glaskeramik- oder Keramikröhrchen handelt.

18. Vorrichtung nach einem der Ansprüche 12 bis 17, **dadurch gekennzeichnet, dass** diese eine Zuglasttesteinrichtung aufweist, mit der nach dem Annealing ein Zuglasttest durchgeführt wird.

19. Vorrichtung nach einem der Ansprüche 12 bis 18, **dadurch gekennzeichnet, dass** die Führungseinrichtung (8) ein Federkraftelement (6) aufweist, mit dem die zu verschweißenden metallischen Drähte (2) vor dem Verschweißen mittels der Laserquelle (1) mit einer vom Federkraftelement (6) applizierten Kraft aufeinandergefahren werden.

20. Vorrichtung nach Anspruch 19, **dadurch gekennzeichnet, dass** es sich beim Federkraftelement (6) um ein Element aus der Gruppe Servomotor, pneumatisches, hydraulisches oder magnetisches Federkraftelement handelt.

## Claims

1. A wire comprising at least two metal wires welded together by means of a laser source, wherein the welding point is produced by means of a method according to any one of claims 4 to 11 or by means of an apparatus according to any one of claims 12 to 20, **characterised in**
**that** the welding point (3) is a welding bead arising during the welding of the wires (2), said welding bead extending over the radial cross-section of the metal wires (2) to be welded.

2. The wire according to claim 1, **characterised in that** the wires (2) are carbon-containing wires.

3. The wire according to claim 1 or 2, **characterised in that** the maximum diameter of the wires (2) to be welded amounts to 2 mm.

4. A method for welding metal wires, wherein at least two metal wires (2) are welded together by means of a laser source (1),
**characterised in**
a) **that** prior to the welding, at least one wire (2) to be welded is subjected to an annealing process by means of a hot gas flow (4) and/or
b) **that** during the welding, at least the arising welding point (3) is subjected to an annealing process by means of a hot gas flow (4) and/or
c) **that** following the latter, the arising welding point (3) is subjected to an annealing process by means of a hot gas flow (4), and
**that** during the welding of the metal wires (2) to be welded, the latter are run into one another by means of a spring force element (6),
wherein the running of the metal wires (2) into one another is limited by means of a path limiting element (7), in such a way that the welding point (3) arising during the welding of the metal wires (2) does not extend beyond the radial cross-section of the metal wires (2).

5. The method according to claim 4, **characterised in that** the hot gas is one from the group air, nitrogen, noble gas.

6. The method according to claim 4 or 5, **characterised in that** the welding of the metal wires (2) is carried out under a protective gas.

7. The method according to any one of claims 4 to 6, **characterised in that** the metal wires (2) to be welded are guided towards one another with a guide arrangement (8a, 8b) and then welded together.

8. The method according to claim 7, **characterised in that** the metal wires (2) to be welded, when they are guided towards one another, are mutually aligned by means of small tubes (5) surrounding the metal wires (2).

9. The method according to any one of claims 4 to 8, **characterised in that** the welding point (3) is subjected to a tensile load test after the annealing process.

10. The method according to any one of claims 4 to 9, **characterised in that** the metal wires (2) to be welded, prior to the welding, are run towards one another with a force applied by means of a spring force element (6).

11. The method according to any one of claims 4 to 10, **characterised in that** the annealing process is carried out at a temperature of +250 °C to 500 °C.

12. An apparatus for welding metal wires with a laser source, for performing the method according to any one of claims 4 to 11,
**characterised in**
**that** said apparatus comprises a nozzle (9) directed onto the welding point (3), with which a hot gas (4) is applied to the welding point (3),
**that** said apparatus comprises a spring element (6) for running the metal wires (2) to be welded into one another, and
**that** said apparatus comprises a path limiting element (7), with which the running of the metal wires (2) into one another is limited by means of the spring force element (6), in such a way that the welding point (3) arising when the metal wires (2) are welded does not extend beyond the radial cross-section of the metal wires (2).

13. The apparatus according to claim 12, **characterised in that** the directing of the nozzle (9) is such that, during the welding, the maximum temperature of the metal wires (2) to be welded together is at the centre of the welding point (3).

14. The apparatus according to claim 12 or 13, **characterised in that** said apparatus is set up such that a protective gas is applied by means of the nozzle (9) for the hot gas.

15. The apparatus according to any one of claims 12 to 14, **characterised in that** said apparatus comprises a guide arrangement (8a, 8b), with which the metal wires (2) to be welded are guided towards one another and then welded together by means of the laser source (1).

16. The apparatus according to claim 15, **characterised in that** the guide arrangement (8a, 8b) comprises precision compensation tubes (5) for the mutual alignment of the metal wires (2) which are to be welded together by means of the laser source (1) and which are to be surrounded by the precision compensation tubes (5).

17. The apparatus according to claim 16, **characterised in that** the precision compensation tubes (5) are glass, glass-ceramic or ceramic tubes.

18. The apparatus according to any one of claims 12 to 17, **characterised in that** said apparatus comprises a tension load testing device, with which a tensile load test can be carried out after the annealing process.

19. The apparatus according to any one of claims 12 to 18, **characterised in that** the guide arrangement (8) comprises a spring force element (6) with which, prior to the welding by means of the laser source (1), the metal wires (2) to be welded are run towards one another with a force applied by a spring force element (6).

20. The apparatus according to claim 19, **characterised in that** the spring force element (6) is an element from the group comprising servomotor, pneumatic, hydraulic or magnetic spring force element.

## Revendications

1. Fil constitué d'au moins deux fils métalliques soudés ensemble à l'aide d'une source laser, dans lequel le point de soudure est réalisé à l'aide d'un procédé selon l'une des revendications 4 à 11 ou à l'aide d'un dispositif selon l'une des revendications 12 à 20, **caractérisé en ce**
**que** le point de soudure (3) est une perle de soudure créé pendant le soudage des fils (2), laquelle ne s'étend pas sur la section transversale radiale des fils métalliques (2) à souder.

2. Fil selon la revendication 1, **caractérisé en ce que** les fils (2) sont des fils contenant du carbone.

3. Fil selon la revendication 1 ou 2, **caractérisé en ce que** le diamètre maximal des fils à souder (2) mesure 2 mm.

4. Procédé de soudage de fils métalliques, dans lequel au moins deux fils métalliques (2) sont soudés ensemble à l'aide d'une source laser (1),
**caractérisé en ce**
a) **qu'**avant le soudage, au moins un fil à souder (2) est soumis à un recuit à l'aide d'au moins un flux de gaz chaud (4), et/ou
b) en ce que pendant le soudage, au moins le point de soudure (3) réalisé est soumis à un recuit à l'aide d'un flux de gaz chaud (4), et/ou
c) en ce que la point de soudure (3) réalisé est consécutivement soumis à un recuit à l'aide d'un flux de gaz chaud (4), et
en ce que pendant le soudage des fils métalliques à souder (2), ceux-ci sont guidés l'un dans l'autre à l'aide d'un élément à force de ressort (6), l'interpénétration des fils métalliques (2) étant limitée par un élément de limitation de chemin (7) de telle façon que les points de soudure (3) réalisés pendant le soudage des fils métalliques (2) ne s'étend pas sur la section transversale radiale des fils métalliques (2).

5. Procédé selon la revendication 4, **caractérisé en ce que** le gaz chaud est l'un parmi le groupe comprenant l'air, l'azote et le gaz noble.

6. Procédé selon la revendication 4 ou 5, **caractérisé en ce que** le soudage des fils métalliques (2) est réalisé sous gaz protecteur.

7. Procédé selon l'une des revendications 4 à 6, **caractérisé en ce que** les fils métalliques à souder (2) sont guidés l'un sur l'autre à l'aide d'un dispositif de guidage (8a, 8b), puis soudés ensemble.

8. Procédé selon la revendication 7, **caractérisé en ce que** pendant la superposition, les fils métalliques à souder (2) sont alignés les uns par rapport aux autres à l'aide de petits tubes (5) entourant les fils métalliques (2).

9. Procédé selon l'une des revendications 4 à 8, **caractérisé en ce que** suite au recuit, le point de soudure (3) est exposé à un test de charge de traction.

10. Procédé selon l'une des revendications 4 à 9, **caractérisé en ce qu'**avant le soudage, les fils métalliques à souder (2) sont superposés au moyen d'une force appliquée à l'aide d'un élément à force de ressort (6).

11. Procédé selon l'une des revendications 4 à 10, **caractérisé en ce que** le recuit est réalisé à une température de +250 °C à 500 °C.

12. Dispositif pour le soudage de fils métalliques à l'aide d'une source laser, pour l'exécution du procédé selon l'une des revendications 4 à 11,
**caractérisé en ce**
**que** celui-ci comporte une buse (9) orientée vers le point de soudure (3), avec laquelle un gaz chaud (4) est appliqué sur le point de soudure (3),
en ce que celui-ci comporte un élément de ressort (6) permettant de guider les fils métalliques à souder (2) l'un dans l'autre, et
en ce que celui-ci comporte un élément de limitation de chemin (7), avec lequel le guidage des fils métalliques (2) l'un dans l'autre est limité de telle façon à l'aide de l'élément de limitation de chemin (7), que les points de soudure (3) réalisés pendant le soudage des fils métalliques (2) ne s'étend pas sur la section transversale radiale des fils métalliques (2).

13. Dispositif selon la revendication 12, **caractérisé en ce que** l'orientation de la buse (9) est telle que pendant le soudage, la température maximale des fils métalliques à souder ensemble (2) se trouve au centre du point de soudure (3).

14. Dispositif selon la revendication 12 ou 13, **caractérisé en ce que** celui-ci est conçu de telle façon qu'un gaz protecteur est appliqué à l'aide de la buse (9) destinée au gaz chaud.

15. Dispositif selon l'une des revendications 12 à 14, **caractérisé en ce que** celui-ci comporte un dispositif de guidage (8a, 8b), avec lequel les fils métalliques à souder (2) sont superposés, puis soudés ensemble à l'aide de la source laser (1).

16. Dispositif selon la revendication 15, **caractérisé en ce que** le dispositif de guidage (8a, 8b) comporte des petits tubes de correction de précision (5) pour l'alignement des fils métalliques (2) destinés à être entourés par les petits tubes de correction de précision (5) et soudés ensemble à l'aide de la source laser (1).

17. Dispositif selon la revendication 16, **caractérisé en ce que** les petits tubes de correction de précision (5) sont des petits tubes en verre, en céramique de verre ou en céramique.

18. Dispositif selon l'une des revendications 12 à 17, **caractérisé en ce que** celui-ci comporte un dispositif de test de charge de traction, permettant de réaliser un test de charge de traction suite au recuit.

19. Dispositif selon l'une des revendications 12 à 18, **caractérisé en ce que** le dispositif de guidage (8) comporte un élément à force de ressort (6), avec lequel les fils métalliques à souder (2) sont superposés avant le soudage à l'aide de la source laser (1) avec une force appliquée par l'élément à force de ressort (6).

20. Dispositif selon la revendication 19, **caractérisé en ce que** l'élément à force de ressort (6) est un élément sélectionné parmi le groupe comprenant un servomoteur, un élément à force de ressort pneumatique, hydraulique ou magnétique.
